**Europäisches Patentamt**

**European Patent Office**

**Office européen des brevets**

(19)

(11) Veröffentlichungsnummer: **0 436 498 A1**

## (12) EUROPÄISCHE PATENTANMELDUNG

(21) Anmeldenummer: **91100171.7**

(22) Anmeldetag: **07.01.91**

(51) Int. Cl.$^5$: **B32B 25/04, B32B 3/06, B32B 7/06**

(30) Priorität: **05.01.90 DE 4000217**

(43) Veröffentlichungstag der Anmeldung:
**10.07.91 Patentblatt 91/28**

(84) Benannte Vertragsstaaten:
**AT BE CH DE DK ES FR GB GR IT LI LU NL SE**

(71) Anmelder: **Kuhn + Kaiser GmbH**
**Benediktenweg 31**
**W-8132 Tutzing (DE)**

(72) Erfinder: **Kaiser, Walter**
**Buchenstrasse 11**
**W-5927 Erndtebrück 2 (DE)**
Erfinder: **Kuhn, Peter, Dr.**
**Ludwig-Behr-Strasse 24**
**W-8132 Tutzing (DE)**

(74) Vertreter: **Herrmann-Trentepohl, Werner,**
**Dipl.-Ing. et al**
**Kirschner, Grosse, Bockhorni Forstenrieder**
**Allee 59**
**W-8000 München 71 (DE)**

(54) **Bausatz.**

(57)    Bei einem Bausatz ist der Grundkörper aus einem plattenförmigen sandwichartigen aufgebauten Verbundkörper herstellt, der entsprechend dem jeweiligen Einsatzzweck in Form und Größe angepaßt ist sowie an wenigstens einem Teil seiner Oberfläche mit einem Klettbandverschlußteil versehen ist. Der zu befestigende Gegenstand, der von Belägen, Formteilen und auswechselbaren Arbeitseinrichtungen bzw. Bearbeitungseinrichtungen gebildet sein kann, besitzt eine korrespondierende Kontaktfläche mit dem korrespondierenden Klettenbandverschlußteil. Der Grundkörper ist von mehreren Lagen Recycling-Altgummi mit Zusätzen wie Weichgummi oder Hartgummiplatten gebildet, wobei die einzelnen Lagen untereinander fest verklebt sind.

EP 0 436 498 A1

## BAUSATZ

Die Erfindung betrifft einen Bausatz, umfassend einen Grundkörper und daran lösbar befestigbare Gegenstände, insbesondere Beläge, Formteile, auswechselbare Arbeitseinrichtungen und/oder dgl.

Die Erfindung betrifft insbesondere einen Bausatz, bei welchem ein umweltfreundlicher Grundkörper aus wiederverwendetem, bereits genutztem Material besteht und bei welchem die Befestigung der Gegenstände schnell erfolgen kann, wobei gleichzeitig eine dauerhafte aber wieder lösbare Fixierung der Gegenstände an dem Grundkörper erfolgt.

Die Wiederverwendung bereits genutzter Materialien, die nur unter erheblichen Belastungen für die Umwelt vernichtet, bzw. entsorgt werden können, stellt ein zentrales und ständig an Bedeutung zunehmendes Ziel der Abfallbeseitigung in Industriegesellschaften dar. So werden beispielsweise Autoreifen mittels bestimmter Verfahren zu Platten wiederverarbeitet, die entsprechend den jeweiligen Zusammensetzungen in unterschiedlich flexiblen und belastbaren Ausführungen hergestellt werden. In Verbindung mit anderen geeigneten Werkstoffen und Materialien - z.B. Hartgummiplatten und ähnlichem - wird es möglich, in der Stärke variable Platten oder Formteile herzustellen, die als Untergrund oder Basis für verschiedene Anwendungsbereiche dienen können.

Der Erfindung liegt daher die Aufgabe zugrunde, die aus Gründen des Umweltschutzes wünschenswerte Wiederverwendbarkeit von Altgummi, vor allem Autoreifen, dergestalt zu sichern, daß durch ein möglichst variables und breites Anwendungsspektrum eine wirtschaftlich konkurrenzfähige Alternative zu ebenfalls für die in Frage kommenden Einsatzgebiete verwendbaren Materialien und Werkstoffen geschaffen wird.

Diese Aufgabe wird gemäß der Erfindung dadurch gelöst, daß der Grundkörper im wesentlichen plattenförmig ausgebildet und entsprechend dem jeweiligen Einsatzzweck in Form und Größe angepaßt ist sowie an wenigstens einem Teil seiner Oberfläche mit einem Klettenbandverschlußteil versehen ist, und daß der zu befestigende Gegenstand eine korrespondierende Kontaktfläche mit dem korrespondierendem Klettenbandverschlußteil aufweist. Durch die erfindungsgemäße Ausgestaltung des recyclten Grundmaterials wird ermöglicht, daß dieses schnell und problemlos, gleichzeitig aber zuverlässig und dauerhaft mit geeigneten Gegenständen, wie beispielsweise Boden-, Wand- und Deckenbelägen, auswechselbaren Werkzeugen oder Bearbeitungseinrichtungen verbunden werden kann. Konstruktiv wird durch eine Kombination der aus Altgummi hergestellten Recycling-Platten oder -Formteile mit entsprechenden Stoffen oder Materialien, wie beispielsweise Weichgummi oder Hartgummilagen eine Basiskonstruktion geschaffen, die durch Anbringung einer an sich bekannten Befestigungsmöglichkeit auf dieser Ausgangskonstruktion möglichst vielfältige Austauschvarianten der Oberflächenbeläge, Formteile oder Werkzeuge und/oder Bearbeitungseinrichtungen gestattet.

Die einzelnen Lagen aus Recycling-Altgummi mit Platten aus Hartgummi oder ähnlichem werden miteinander in geeigneter Weise verklebt, und je nach Wahl der verschiedenen Qualitäten wird eine Platte hergestellt, so daß sie variabel in ihrer Stärke bzw. ihrer Flexibilität ist. Damit ergeben sich Einsatzmöglichkeiten z.B. für den Bereich von Fußböden, Decken, Wänden und insbesondere Sportstättenböden. An letztere werden konkrete Anforderungen hinsichtlich der Stärke, der Flexibilität und des Federungsverhaltens gestellt, die bei ensprechend gewählten erfindungsgemäßen Kombinationen von geeigneten Materialien problemlos erfüllt werden können.

Die erfindungsgemäße schnelle, problemlose und gleichzeitig dauerhafte, aber wieder lösbare zuverlässige Verbindung mit einer zusätzlichen Oberfläche wird durch Aufbringen eines herkömmlichen marktüblichen Klettenbandes auf den erfindungsgemäßen plattenförmigen Verbundkörper und die variabel gestaltbaren Zusatzmaterialien erreicht. Da die zu befestigenden Gegenstände korrespondierende Kontaktflächen mit korrespondierenden Klettbandverschlußteilen aufweisen, können sie jederzeit schnell und problemlos, im wesentlichen sogar ohne den Einsatz von Werkzeugen, ausgewechselt werden. Gleichzeitig entsteht durch das Ineinandergreifen der jeweiligen Klettenbänder auf dem plattenförmigen Verbundkörper und auf dem anzubringenden Gegenstand eine feste, jedoch wieder lösbare zuverlässige Verbindung zwischen den beiden Komponenten. Insbesondere für Hallen, die für verschiedene Veranstaltungen umgerüstet werden müssen, ist der Gegenstand der Erfindung besonders geeignet.

Als Ausgangsbasis dient eine entsprechend gestaltete Verbundplatte mit dem Recycling-Altgummi, auf der ein Klettenbandverschlußteil aufgebracht ist. Die in Frage kommenden Oberflächen, wie z.B. verschiedene Beläge für Tennisturniere, Bodenmatten für Turnveranstaltungen, Parkettböden für Tanzveranstaltungen, Kunstrasen für Rasensportarten u.s.w., werden mittels der Klettenverschlußbänder schnell ausgewechselt und bieten dennoch den erforderlichen Halt. Probleme, daß während eines Tennisspiels z.B. der Bodenbelag verrutscht und dadurch die Gesundheit der Spieler gefährdet wird, wie dies bei aufgeklebten Teppichböden vorkommt, treten bei der Anwendung des erfindungsgemäßen Bausatzes nicht auf.

Denkbar ist auch der Einsatz für (mobile) Zirkusarenen, da auch hier verschiedene Untergrundbeschaffenheiten benötigt werden. Weiterhin könnten repräsentative Eingangshallen, z.B. von Hotels, öffentlichen Gebäuden oder Verwaltungsgebäuden mit Böden, Decken oder Wänden der erfindungsgemäßen Art ausgestaltet werden, damit eine dem Anlaß entsprechende Dekorierung (Weihnachten, Jubiläen u.s.w.) oder Zweckbestimmung (Richtungspfeile, Dekormuster u.s.w.) ohne großen Aufwand erfolgen. In letzter Konsequenz scheint es auch möglich, Wohnräume mit dem erfindungsgemäßen Untergrund auszustatten, so daß Tapeten- oder Fußbodenwechsel auch kurzfristig realisiert werden können. Der erfindungsgemäße Bausatz ist hier auch wegen seiner schalldämmenden Eigenschaften vorteilhaft einsetzbar.

Die oben dargestellten Einsatzmöglichkeiten betreffen die großflächige Anwendung des aus Recycling-Verbundplatte und daran befestigbaren Belägen bestehenden Bausatzes. Durchaus sinnvoll scheint aber auch die Herstellung von Formteilen als eine Art "Grundwerkzeug oder Basiswerkzeug" zu sein, mit dem die verschiedenen Verarbeitungszusätze, wie Werkzeuge und Bearbeitungseinrichtungen verbunden werden können.

Die eigentliche Recycling-Masse wird dabei in relativ stabiler starrer Form hergestellt und mit einer flexiblen (eventuell aus Weichgummi bestehenden) Masse verbunden, die bei genügend dimensionierter Stärke als eine Art Griffmuschel oder Griffvertiefung dienen kann, da das Weichgummi mit den Fingern eindrückbar ist.

Bei entsprechender Größe des Formteils in Quaderform können mit diesem Quader aufgrund der Klettenbandverschlußteile verschiedene Werkzeuge oder Bearbeitungseinrichtungen verbunden werden. So sind für die Autopflege z.B. Schleifpapiere, Spachtel, Poliertücher, Schwämme, Bürsten und ähnliches mit Klettenbandverschlußteilen auszurüsten, die mit einem einzigen Grundquader und korrespondierenden Klettenbandverschlußteilen verbunden und somit als kompletter Zubehörsatz oder Autopflegesatz angeboten werden können.

Ähnlich läßt sich für den Bereich der Skipflege ein Sortiment von Feilen, Schleifpapier, Polierwatte, Spachteln u.s.w. zusammenstellen, das mit einem Recycling-Quader komplett als Pflegesatz für Alpin- und Langlauf-Ski gleichermaßen geeignet ist. Weitere Anwendungsgebiete ergeben sich im Handwerksbereich.

Ein bevorzugtes Ausführungsbeispiel des Gegenstandes des Erfindung ist in der schematischen Zeichnung dargestellt.

Der Grundkörper 1 ist quaderförmig ausgebildet und besteht aus einem Verbund mehrerer miteinander verklebter Lagen. Zwischen zwei Lagen Recycling-Altgummi 2 und 3 ist eine Weichgummischicht 4 angeordnet, die in ihrer Stärke etwa finger-dick ausgebildet ist, so daß die Weichgummischicht mit den Fingern eingedrückt werden kann und eine Art Griffmuschel gebildet wird, die das Halten des Verbundkörpers erleichtert.

Auf die Oberseite der Recycling-Altgummischicht 2 bzw. die Unterseite der Recycling-Altgummischicht 3 ist in diesem Falle der Hakenteil 6 bzw. 7 eines Klettenbandverschlusses 5 aufgebracht. Auf der Unterseite des Belages 9 ist der korrespondierende Ösenteil 8 des Klettenbandverschlusses 5 aufgebracht. Werden die Flächen 6 und 8 in Berührung gebracht, dann erfolgt in bekannter Weise ein klettenartiges Verhaften der Flächen und damit ein sicherer Halt des Belages 9 auf dem Verbundkörper 1. Bei dem Belag 9 handelt es sich bei dem gezeigten Ausführungsbeispiel z.B. um ein Poliertuch.

Es ist natürlich auch denkbar, daß der Grundkörper allseitig mit Haken- bzw. Ösenteilen von Klettenbandverschlüssen versehen ist, so daß sich an allen seinen im wesentlichen ebenen Seiten entsprechende Bearbeitungseinrichtungen oder Werkzeuge lösbar befestigen lassen. Die Flexibilität des Verbundkörpers hat den Vorteil, daß dieser nicht nur zur Bearbeitung von ebenen Flächen, sondern auch von profilierten Flächen eingesetzt werden kann, da er sich diesen Flächen ohne weiteres anpaßt. Schließlich kann der erfindungsgemäße Verbundkörper ergonomisch ausgebildet sein, d.h. für den jeweiligen Einsatzzweck vorteilhaft geformt sein, so daß er sich z.B. besser an eine Handfläche anpaßt oder an andere Körperteile beim Einsatz als Polster, Abstützzung und dgl.

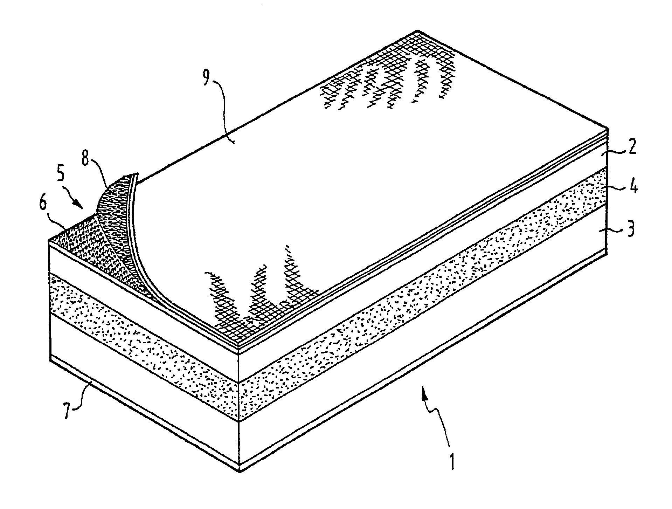

**Patentansprüche**

1.  Bausatz, umfassend einen Grundkörper und daran lösbar befestigbare Gegenstände, insbesondere Beläge, Formteile, auswechselbare Arbeitseinrichtungen und /oder dgl., **dadurch gekennzeichnet,** daß der Grundkörper (1) i.w. plattenförmig ausgebildet und entsprechend dem jeweiligen Einsatzzweck in Form und Größe angepaßt ist sowie an wenigstens einem Teil seiner Oberfläche mit einem Klettenbandverschlußteil (6) versehen ist und daß der zu befestigende Gegenstand (9) eine korrespondierende Kontaktfläche mit dem korrespondierenden Klettenbandverschlußteil (8) aufweist.

2.  Bausatz nach Anspruch 1, **dadurch gekennzeichnet,** daß der Grundkörper (1) von einem sandwichartig aufgebauten Verbundkörper gebildet ist.

3.  Bausatz nach Anspruch 1 oder 2, **dadurch**

**gekennzeichnet**, daß der Grundkörper (1) aus einem flexiblen Material besteht.

4. Bausatz nach Anspruch 1 oder 2, **dadurch gekennzeichnet**, daß der Grundkörper (1) aus einem stoßdämpfenden Material besteht.

5. Bausatz nach Anspruch 1 oder 2, **dadurch gekennzeichnet**, daß der Grundkörper (1) aus einem schalldämmenden Material besteht.

6. Bausatz nach wenigstens einem der vorhergehenden Ansprüche, **dadurch gekennzeichnet**, daß der Grundkörper (1) von mehreren Lagen von Recycling-Altgummi (2,3) gebildet ist.

7. Bausatz nach wenigstens einem der vorhergehenden Ansprüche, **dadurch gekennzeichnet**, daß zusätzlich zu den Lagen von Recycling-Altgummi (2,3) eine oder mehrere Weich- und/oder Hartgummilagen (4) vorgesehen sind.

8. Bausatz nach Anspruch 7, **dadurch gekennzeichnet**, daß die eingelagerte Weichgummischicht (4) wenigstens eine Stärke von 1 cm aufweist.

9. Bausatz nach wenigstens einem der vorhergehenden Ansprüche, **dadurch gekennzeichnet**, daß die Gummilagen (2,3,4) geruchsabsorbierende Mittel enthalten.

10. Bausatz nach wenigstens einem der vorhergehenden Ansprüche, **dadurch gekennzeichnet**, daß die einzelnen Lagen (2,3,4,6,7) miteinander verklebt sind.

11. Bausatz nach wenigstens einem der vorhergehenden Ansprüche, **dadurch gekennzeichnet**, daß der zu befestigende Gegenstand von Boden-, Decken- oder Wandbelägen gebildet ist.

12. Bausatz nach wenigstens einem der vorhergehenden Ansprüche, **dadurch gekennzeichnet**, daß der Grundkörper (1) als ergonomisch gestaltetes Formteil ausgebildet ist und die zu befestigenden Gegenstände auswechselbare Werkzeuge und/oder Bearbeitungsmittel sind.

Europäisches
Patentamt

**EUROPÄISCHER RECHERCHENBERICHT**

Nummer der Anmeldung

| | **EINSCHLÄGIGE DOKUMENTE** | | EP 91100171.7 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) | |
| A | <u>DE - A1 - 3 022 171</u> (STEIN) * Ansprüche * -- | 1,3 | B 32 B 25/04 B 32 B 3/06 B 32 B 7/06 | |
| A | <u>CH - A5 - 646 538</u> (WERNER VIGNOLA) * Ansprüche * -- | 1-3 | | |
| A | <u>US - A - 4 671 981</u> (MC LAUGHLIN) * Ansprüche * ---- | 1,3,11 | | |
| | | | RECHERCHIERTE SACHGEBIETE (Int. Cl.⁵) | |
| | | | B 32 B A 42 B G 09 B | |
| | Der vorliegende Recherchenbericht wurde für alle Patentansprüche erstellt. | | | |

| Recherchenort | Abschlußdatum der Recherche | Prüfer |
|---|---|---|
| WIEN | 03-04-1991 | WEIGERSTORFER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument